# EUROPEAN PATENT SPECIFICATION

(11) **EP 3 277 762 B1**
(45) Date of publication and mention of the grant of the patent: **24.04.2019**
(21) Application number: 16718747.5
(22) Date of filing: 28.03.2016
(51) Int. Cl.: C09D 133/06, D06M 15/356

(54) **COMPOSITION CONTAINING OLIGOMER**
ZUSAMMENSETZUNG MIT OLIGOMER
COMPOSITION CONTENANT UN OLIGOMÈRE

(30) Priority: 31.03.2015 US 201562140760 P
(43) Date of publication of application: 07.02.2018
(73) Proprietor: Rohm and Haas Company, Philadelphia, PA 19106 (US)
(72) Inventor: LAFLEUR, Edward E., Collegeville, PA 19426 (US); RAY, Himal, Collegeville, PA 19426 (US); PRANAMI, Gaurav, Philadelphia, PA 19103 (US)
(74) Representative: Houghton, Mark Phillip
(86) International application number: PCT/US2016/024487
(87) International publication number: WO 2016/160685

(56) References cited:
- JP-A- H0 762 036
- JP-A- 2000 007 882
- US-A1- 2002 007 009
- US-A1- 2003 114 583

## Description

It is often desired to provide an aqueous composition that, after being applied to a substrate, forms a film and also undergoes a chemical reaction such as crosslinking. Such aqueous compositions are useful, for example, as treatments for woven or nonwoven textiles. Such treatments are intended to provide the textile with various properties such as, for example, tensile strength, especially tensile strength when tested in the presence of an alcohol. In the past, some aqueous compositions were used that contained latex polymer and in which the crosslinking reaction that took place after application to the substrate caused the release of formaldehyde, which is undesirable. In the past, some latex polymers were used that required exposure to relatively high temperatures in order to undergo crosslinking after application to substrate, and such high temperatures are also undesirable.

US 6,624,243 describes aqueous dispersions of functionalized copolymers based on monomers including hydrolyzable silane monomers, ethylenically unsaturated epoxide compounds, and other monomers. It is desired to provide aqueous compositions that, when applied to textile substrates, provide one or more of the following benefits: the textile substrates have improved tensile strength; the composition requires relatively low temperature in order to achieve acceptable tensile strength; and/or the composition undergoes crosslinking with the release of little or no formaldehyde.

The following is a statement of the invention.

A first aspect of the present invention is an aqueous composition comprising water and an oligomeric composition, wherein said oligomeric composition comprises polymerized units of
(a) one or more monoethylenically unsaturated epoxide-functional monomers,
(b) one or more monoethylenically unsaturated alkoxysilane-functional monomers,
(c) one or more chain transfer agents, and
(d) one or more monoethylenically unsaturated monomers different from (a), (b), and (c),
wherein an oligomeric composition is a composition where the portion of the composition that is soluble in tetrahydrofuran (THF) to the extent of 0.25 g or more per 50 g of THF at 25°C is as follows: the THF-soluble portion contains polymerized units of one or more monomers and is a composition in which 30% or more by weight, based on the weight of the THF-soluble portion of the composition, is molecules having a molecular weight of 5,000 or less.

A second aspect of the present invention is a method of treating a textile comprising bringing the aqueous composition of the first aspect into contact with said textile and then evaporating said water from said aqueous composition.

The following is a detailed description of the invention.

As used herein, the following terms have the designated definitions, unless the context clearly indicates otherwise.

The glass transition temperature (Tg) of a material is determined by differential scanning calorimetry using the midpoint method and temperature scan rate of 10°C per minute according to test method ASTM D7426-08 (American Society of Testing and Materials, Conshohocken, PA, USA).

A "polymer," as used herein is a relatively large molecule made up of the reaction products of smaller chemical repeat units. Polymers may have structures that are linear, branched, star shaped, looped, hyperbranched, crosslinked, or a combination thereof; polymers may have a single type of repeat unit ("homopolymers") or they may have more than one type of repeat unit ("copolymers"). Copolymers may have the various types of repeat units arranged randomly, in sequence, in blocks, in other arrangements, or in any mixture or combination thereof.

Polymer molecular weights can be measured by standard methods such as, for example, size exclusion chromatography (SEC, also called gel permeation chromatography or GPC, using polystyrene standard and tetrahydrofuran as solvent). Polymers may have extremely high Mw; some polymers have Mw above 1,000,000; typical polymers have Mw of 1,000,000 or less. Some polymers are crosslinked, and crosslinked polymers are considered to have infinite Mw.

As used herein "weight of polymer" means the dry weight of polymer, and "weight of oligomer" means the dry weight of oligomer.

Molecules that can react with each other to form the repeat units of a polymer are known herein as "monomers." The repeat units so formed are known herein as "polymerized units" of the monomer.

As used herein, an "oligomer" is, like a polymer, made up of the reaction products of smaller chemical repeat units, also called "polymerized units" of the oligomer. Oligomers have fewer polymerized units than polymers. As used herein, an oligomeric composition is a composition where the portion of the composition that is soluble in tetrahydrofuran (THF) to the extent of 0.25 g or more per 50 g of THF at 25°C is as follows. The THF-soluble portion contains polymerized units of one or more monomers and is a composition in which 30% or more by weight, based on the weight of the THF-soluble portion of the composition, is molecules having molecular weight of 5,000 or less. A polymer is a composition in which more than 70% of the molecules, by weight based on the weight of the polymer, has molecular weight of more than 5,000.

As used herein, a "monoethylenically unsaturated monomer" is a monomer that has exactly one carbon-carbon double bond that is capable of participation in a vinyl polymerization reaction.

Vinyl monomers have the structure I: 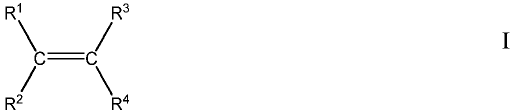 where each of R¹, R², R³, and R⁴ is, independently, a hydrogen, a halogen, an aliphatic group (such as, for example, an alkyl group), a substituted aliphatic group, an aryl group, a substituted aryl group, another substituted or unsubstituted organic group, or any combination thereof, and the carbon-carbon double bond is capable of participation in a vinyl polymerization reaction.

A monoethylenically unsaturated monomer is a vinyl monomer that has exactly one non-aromatic carbon-carbon double bond that is capable of participating in a vinyl polymerization reaction. A multiethylenically unsaturated monomer is a vinyl monomer that has two or more non-aromatic carbon-carbon double bonds that are capable of participating in a vinyl polymerization reaction.

Vinyl monomers include, for example, styrene, substituted styrenes, dienes, ethylene, other alkenes, dienes, ethylene derivatives, and mixtures thereof. Ethylene derivatives include, for example, unsubstituted or substituted versions of the following: ethenyl esters of substituted or unsubstituted alkanoic acids (including, for example, vinyl acetate and vinyl neodecanoate), acrylonitrile, (meth)acrylic acids, (meth)acrylates, (meth)acrylamides, vinyl chloride, halogenated alkenes, and mixtures thereof. As used herein, "(meth)acrylic" means acrylic or methacrylic; "(meth)acrylate" means acrylate or methacrylate; and "(meth)acrylamide" means acrylamide or methacrylamide. "Substituted" means having at least one attached chemical group such as, for example, alkyl group, alkenyl group, vinyl group, hydroxyl group, carboxylic acid group, other functional groups, and combinations thereof. Substituted monomers include, for example, monomers with more than one carbon-carbon double bond, monomers with hydroxyl groups, monomers with other functional groups, and monomers with combinations of functional groups. (Meth)acrylates are substituted and unsubstituted esters or amides of (meth)acrylic acid. As used herein, a vinyl aromatic monomer is a vinyl monomer that contains one or more aromatic ring.

As used herein, acrylic monomers are monomers selected from (meth)acrylic acid, aliphatic esters of (meth)acrylic acid, aliphatic esters of (meth)acrylic acid having one or more substituent on the aliphatic group, (meth)acrylamide, N-substituted (meth)acrylamide, and mixtures thereof.

As used herein, an "alkyl (meth)acrylate monomer" has the structure II 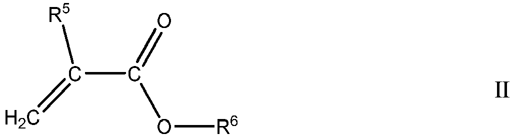 where R⁵ is hydrogen or methyl, and R⁶ is an alkyl group. As used herein, an "alkyl acrylate monomer" has structure II in which R⁵ is hydrogen. As used herein, an "alkyl methacrylate monomer" has structure II in which R⁵ is methyl.

A trialkoxysilyl group is a monovalent group that has the structure III: 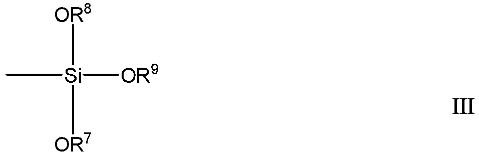 where R⁷, R⁸, and R⁹ is each independently an alkyl group. As used herein, a trialkoxysilyl-functional monomer is a vinyl monomer that contains one or more trialkoxysilyl group.

An epoxide group is a monovalent group that has the structure IV: 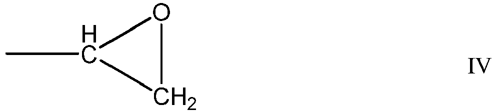 As used herein, an epoxide-functional monomer is a vinyl monomer that contains an epoxide group.

A carboxyl-functional monomer is a monomer that contains one or more carboxyl group. The carboxyl group may be in either the acid form or the anion form or a mixture thereof.

A oligomer or polymer made by aqueous emulsion polymerization is known herein respectively as a "latex" oligomer or polymer. Latex oligomers and polymers exist as particles distributed throughout a continuous aqueous medium. As used herein, a continuous aqueous medium is a liquid that contains water in the amount, by weight based on the weight of the continuous aqueous medium, of 60% or more.

As used herein, a chain transfer agent has the structure R¹²-X, where X is a weakly bonded hydrogen or halogen atom, and R¹² is a chemical group. A chain transfer agent is considered to react with a growing polymer or oligomer chain during radical polymerization by terminating the growing polymer chain by capping it with an X• radical, thus creating an R¹²• radical. It is considered that the R¹²• radical initiates the growth of another polymer or oligomer chain. Therefore, it is considered that when a polymer or oligomer is made in the presence of a chain transfer agent, many of the chains will have an R¹²- group attached to at least one end of the chain. It is also considered that some of the polymer or oligomer chains will have no R¹²- group. When an R¹²- group is attached to a polymer or oligomer chain, it is considered herein that the oligomer or polymer has a "polymerized unit" of the chain transfer agent R¹²-X.

The oligomeric composition of the present invention contains an oligomeric composition. It is contemplated that the oligomeric composition will contain molecules having a variety of molecular weights. In the oligomeric composition, 30% or more of the molecules, by weight based on the weight of the oligomeric composition, have molecular weight of 5,000 or less; preferably 4,000 or less. Preferably, 50% or more of the molecules in the oligomeric composition, by weight based on the weight of the oligomeric composition, have molecular weight of 45,000 or less. When the oligomeric composition is analyzed by size exclusion chromatography, a graph of abundance versus molecular weight is produced. A "mode" is an identifiable peak in that graph. Each mode has a characteristic weight-average molecular weight (Mw). Preferably, the oligomeric material has one or more mode having Mw of 5,000 or lower; more preferably 4,000 or lower.

When a ratio is said herein to be X:1 or greater, it is meant that the ratio is Y: 1, where Y is greater than or equal to X. For example, if a ratio is said to be 3:1 or greater, that ratio may be 3:1 or 5:1 or 100:1 but may not be 2:1. Similarly, when a ratio is said herein to be W:1 or less, it is meant that the ratio is Z:1, where Z is less than or equal to W. For example, if a ratio is said to be 15:1 or less, that ratio may be 15:1 or 10:1 or 0.1:1 but may not be 20:1.

The oligomeric composition of the present invention contains polymerized units of one or more monoethylenically unsaturated epoxide-functional monomers (a). Preferred epoxide-functional monomers (a) contain the glycidyl group, which has the structure V: 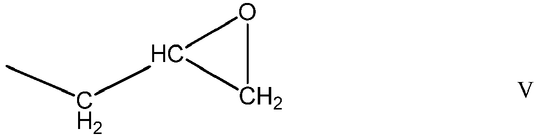 Preferred epoxide-functional monomers are glycidyl (meth)acrylate; more preferred is glycidyl methacrylate.

Preferably, the amount of polymerized units of epoxide-functional monomer (a) in the oligomer is, by weight based on the weight of the oligomer, 2% or more; more preferably 4% or more. Preferably, the amount of polymerized units of epoxide-functional monomer (a) in the oligomer is, by weight based on the weight of the oligomer, 10% or less; more preferably 8% or less; more preferably 6% or less.

The oligomer contains polymerized units of one or more trialkoxysilyl-functional monomers (b). Among trialkoxysilyl groups, preferred are those having structure III in which R⁷, R⁸, and R⁹ is each an alkyl group having 6 or fewer carbon atoms; more preferably 4 or fewer carbon atoms; more preferably 2 or fewer carbon atoms. More preferably, R⁷, R⁸, and R⁹ is each a methyl group.

Among trialkoxysilyl-functional monomers (b), preferred are those having structure VI or structure VII:

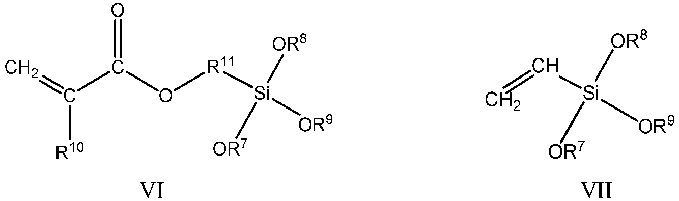

where R¹⁰ is either H or methyl, and R¹¹ is a divalent alkyl group. Among monomers having structure V, preferably R¹⁰ is methyl. Monomers having structure VI are known herein as trialkoxysilylalkyl (meth)acrylates. Monomers having structure VII are known herein as vinyl trialkoxysilanes. Among monomers having trialkoxysilyl groups, preferred are trialkoxysilylalkyl (meth)acrylates. Among monomers having structure VI, preferably R¹¹ is a divalent alkyl group having 10 or fewer carbon atoms; more preferably 8 or fewer carbon atoms; more preferably 6 or fewer carbon atoms; more preferably 4 or fewer carbon atoms; more preferably 3 or fewer carbon atoms. Among monomers having structure VI, preferably R¹¹ is a divalent alkyl group having 1 or more carbon atom; more preferably 2 or more carbon atoms; more preferably 3 or more carbon atoms. Among monomers having structure VI, preferably R¹¹ is a divalent alkyl group having 6 or fewer carbon atoms; more preferably 4 or fewer carbon atoms; more preferably 3 or fewer carbon atoms.

Preferably, the amount of trialkoxysilyl-functional monomer (b) in the oligomer is, by weight based on the weight of the oligomer, 30% or less; more preferably 20% or less. Preferably, the amount of trialkoxysilyl-functional monomer in the oligomer is, by weight based on the weight of the oligomer, 2% or more; more preferably 5% or more.

The oligomer contains polymerized units of one or more chain transfer agents (c). Two preferred types of chain transfer agent (c) are (c1) chain transfer agents that do not contain any trialkoxysilyl group and (c2) chain transfer agents that contain one or more trialkoxysilyl groups. Preferably, the chain transfer agent does not contain any reactive groups other than a weakly bonded atom -X and optionally a trialkoxysilyl group.

Among (c1) chain transfer agents, preferred are alkyl thiols. Alkyl thiols have the structure R¹²-X, where R¹² is an alkyl group and X is hydrogen. Among alkyl thiols, R¹² preferably has4 or more carbon atoms; more preferably 8 or more carbon atoms; more preferably 10 or more carbon atoms. Among alkyl thiols, R¹² preferably has 18 or fewer carbon atoms; more preferably 16 or fewer; more preferably 14 or fewer. Also suitable as (c1) chain transfer agents are alkyl esters of thioalkyl carboxylic acids, which have the structure R¹⁴-C(O)O-R¹⁵, where R¹⁴- has the structure HS-R¹⁶-, where -R¹⁶- is a divalent alkyl group, and where -R¹⁵ is an alkyl group. Preferably -R¹⁶- has 2 or more carbon atoms. Preferably -R¹⁶- has 6 or fewer carbon atoms; more preferably 4 or fewer carbon atoms; more preferably 2 or fewer carbon atoms. Preferably the number of carbon atoms in -R¹⁵ is 6 or fewer; more preferably 5 or fewer; more preferably 4 or fewer.

In embodiments in which one or more chain transfer agent (c1) is used, preferably the amount of polymerized units of chain transfer agent (c1) in the oligomer, by weight based on the weight of the oligomer, is 5% or more; more preferably 10% or more; more preferably 15% or more. In embodiments in which one or more chain transfer agent (c1) is used, preferably the amount of polymerized units of chain transfer agent (c1) in the oligomer, by weight based on the weight of the oligomer, is 30% or less; more preferably 25% or less; more preferably 20% or less.

Among (c2) chain transfer agents, preferred are those with structure VIII: 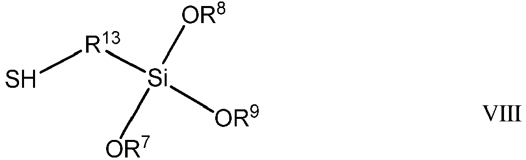 where R¹³ is a bivalent organic group. The definitions and preferences for R⁷, R⁸, and R⁹ are the same as described above. Preferably, R¹³ an alkyl group. Preferably, R¹³ is an alkyl group having 1 or more carbon atoms; more preferably 2 or more carbon atoms; more preferably 3 or more carbon atoms. Preferably, R¹³ is an alkyl group having 6 or fewer carbon atoms; more preferably 5 or fewer carbon atoms; more preferably 4 or fewer carbon atoms; more preferably 3 or fewer carbon atoms.

When a (c2) chain transfer agent is used, the preferred amounts of (c2) chain transfer agent are the same as those described above as the preferred amounts of trialkoxysilyl-functional monomer (b).

The oligomer contains polymerized units of one or more monoethylenically unsaturated monomers (d) that are different from monomers (a), (b), and (c). Preferred monomers (d) are vinyl monomers; more preferred are ethenyl esters of substituted or unsubstituted alkanoic acids , acrylic monomers, vinyl aromatic monomers, and combinations thereof; more preferred are acrylic monomers, vinyl aromatic monomers, and combinations thereof. Among acrylic monomers, preferred are unsubstituted alkyl esters of (meth)acrylic acid; more preferred are unsubstituted alkyl esters of (meth)acrylic acid in which the alkyl group has 8 or fewer carbon atoms; more preferably 4 or fewer carbon atoms. Among vinyl aromatic monomers, preferred are styrene, alpha-methyl styrene, and mixtures thereof; more preferred is styrene.

Preferably, the amount of polymerized groups of carboxyl-functional monomer in the oligomer is, by weight based on the weight of the oligomer, 0 to 0.2%; more preferably 0 to 0.1%; more preferably 0%.

Preferably, the amount of polymerized groups of multiethylenically unsaturated monomer in the oligomer is, by weight based on the weight of the oligomer, 0 to 0.2%; more preferably 0 to 0.1%; more preferably 0%.

Preferably, the oligomer exists in the form of particles dispersed in an aqueous medium. The preferred method of making the oligomer is emulsion polymerization.

It is contemplated that the trialkoxysilyl functional groups and the epoxide functional groups remain intact during the polymerization process that forms the oligomer. It is contemplated that these groups are then available to undergo chemical reactions at a later time, for example during or after applying the composition to a substrate.

Preferably, the aqueous composition of the present invention also contains one or more polymer. Preferably, the polymer exists in the form of particles dispersed in an aqueous medium. The preferred method of making the polymer is emulsion polymerization.

Preferably, 50% or more of the molecules of the polymer have molecular weight of 50,000 or more; more preferably 75,000 or more. Preferably, the polymer has no mode having Mw less than 100,000.°C

Preferably, the polymer contains polymerized units of one or more vinyl monomers.

Preferably, the polymer has Tg of -40°C to 110°C. More preferably, the polymer either has Tg between 80°C and 100°C or else has Tg between -40°C and 10°C.

Preferably, the polymer contains polymerized units of one or more carboxyl-functional monomer. Preferred carboxyl-functional monomers are (meth)acrylic acid, itaconic acid, and mixtures thereof. Preferably the amount of polymerized units of carboxyl-functional monomer is, by weight based on the weight of the polymer, 10% or less; more preferably 8% or less; more preferably 6% or less. Preferably the amount of polymerized units of carboxyl-functional monomer is, by weight based on the weight of the polymer, 1% or more; more preferably 2% or more.

Other than the carboxyl-functional monomer, the preferred vinyl monomers are the same for the polymer as for monomer (d) of the oligomer, as described above. The polymer contains polymerized units of a monoethylenically unsaturated monomer (A), where that monomer (A) is the same as a monomer (d). That is, the polymer contains polymerized units of a monomer, and the oligomer contains polymerized units of one or more monomer that is identical to that monomer (A).

Preferably, the amount of polymerized groups of epoxide-functional monomer in the polymer is, by weight based on the weight of the polymer, 0 to 0.2%; more preferably 0 to 0.1%; more preferably 0%.

Preferably, the amount of polymerized groups of trialkoxylsilyl-functional monomer in the polymer is, by weight based on the weight of the polymer, 0 to 0.2%; more preferably 0 to 0.1%; more preferably 0%.

Preferably, the amount of polymerized groups of chain transfer agent in the polymer is, by weight based on the weight of the polymer, 0 to 0.05%; more preferably 0 to 0.02%; more preferably 0%.

It is useful to characterize the polymerized units of the polymer by noting the amount of polymerized units of monomers other than unsubstituted alkyl esters of (meth)acrylic acid and vinyl aromatic monomers. Preferably, the amount of polymerized groups of such monomer in the polymer is, by weight based on the weight of the polymer, 0 to 0.2%; more preferably 0 to 0.1%; more preferably 0%.

It is useful to characterize the monomers (d) of the oligomer by determining the monomer (d), herein called "monomer (d1)," that has the highest amount of polymerized units of any (d) monomer in the oligomer. The amount of polymerized units of monomer (d1) in the oligomer, by weight based on the weight of the oligomer, on a percentage basis, is "d1%." Preferably, the polymer contains polymerized units of a monomer (A1) that is identical to monomer (d1). The amount of polymerized units of monomer (A1) in the polymer, by weight based on the weight of the polymer, on a percentage basis, is "A1%." Preferably the ratio of d1% to A1% is 0.3:1 or higher; more preferably 0.5:1 or higher. Preferably the ratio of d1% to A1% is 3:1 or lower; more preferably 2:1 or lower.

It is useful to characterize the monomers (d) of the oligomer by determining the monomer (d), herein called "monomer (d2)," that has the second highest amount of polymerized units of any (d) monomer in the oligomer. The amount of polymerized units of monomer (d2) in the oligomer, by weight based on the weight of the oligomer, on a percentage basis, is "d2%." The quotient d12 is calculated by d12 = (d1%)/(d2%). Preferably, the polymer contains both polymerized units of a monomer (A1) that is identical to monomer (d1) and polymerized units of a monomer (A2) that is identical to monomer (d2). The amount of polymerized units of monomer (A2) in the polymer, by weight based on the weight of the polymer, on a percentage basis, is "A2%." The quotient A12 is calculated by A12 = (A1%)/(A2%). Preferably, the ratio of d12 to A12 is 0.3:1 or higher; more preferably 0.5:1 or higher. Preferably, the ratio of d12 to A12 is 3:1 or lower; more preferably 2:1 or lower.

It is useful to characterize the mole ratio of epoxide-functional groups on the oligomer to carboxyl groups on the polymer. Preferably, that mole ratio is 0.9:1 or higher; more preferably 1:1 or higher. Preferably, that mole ratio is 10:1 or lower.

Preferably, the aqueous medium contains water in an amount, by weight based on the aqueous medium, of 75% or more; more preferably 85% or more.

In some embodiments, the composition of the present invention is made by an in-situ method. In a polymer-first in-situ method, the polymer is made by a process of emulsion polymerization to produce a polymer latex; then, in the presence of the polymer latex, the oligomer is made by a process of emulsion polymerization. In an oligomer-first in-situ method, the oligomer is made by a process of emulsion polymerization to produce an oligomer latex; then, in the presence of the oligomer latex, the polymer is made by a process of emulsion polymerization.

Preferably, the aqueous composition is made by blending a polymer latex with an oligomer latex. Preferably, the polymer is made by a process of emulsion polymerization to produce polymer particles dispersed in an aqueous medium. Preferably, the oligomer is made in a separate process of emulsion polymerization in a separate container to produce oligomer particles dispersed in an aqueous medium. Preferably, the oligomer latex and the polymer latex are then mixed together to form a composition in which polymer particles and oligomer particles are both dispersed in the same aqueous medium.

Preferably, the weight ratio of polymer to oligomer is 1:1 or higher; more preferably 1.5:1 or higher; more preferably 2.3:1 or higher. Preferably, the weight ratio of polymer to oligomer is 19:1 or lower; more preferably 9:1 or lower; more preferably 5.7:1 or lower.

Some preferred uses for the composition of the present invention include bringing the composition into contact with a textile, either woven or non-woven, then evaporating the water, either by exposure to moving air or by exposure to temperature above 25°C or both. It is contemplated that during or after the evaporation of the water, the latent crosslinking groups will undergo chemical reactions with each other to form covalent bonds between polymer chains (including bonds between one portion of a specific polymer chain and a different portion of the same chain). It is expected that the bonds formed by the latent crosslinking groups will connect polymer chains residing in the same latex polymer particle and will also connect polymer chains residing in different latex polymer particles.

The aqueous composition may optionally be diluted with water after the oligomer and the optional polymer are made but before the composition is brought into contact with a textile.

One preferred use of the aqueous composition of the present invention is as a binder for nonwoven textiles. That is, the aqueous composition of the present invention is brought into contact with a non-woven collection of fibers, preferably in the form of a flat mat, to form a wet mat; the fibers may or may not be bonded to each other prior to contact with the aqueous composition of the present invention. Preferably, after the aqueous composition has been brought into contact with the mat, the water is evaporated or allowed to evaporate. A preferred method of evaporating the water is to bring the wet mat into contact with air that has temperature of 50°C or higher, more preferably 80°C or higher; more preferably 100°C or higher. Preferably, the wet mat is brought into contact with air that has temperature of 150°C or lower. Preferably, the contact of the wet mat with air at temperature above 50°C is maintained for a time, and then the mat is returned to ambient conditions (approximately 23°C).

Preferably, when the wet mat is contacted with air having temperature above 50°C, the polymer and oligomer undergo one or more chemical reactions that serve to increase the tensile strength that the mat will have after it has been brought back to ambient conditions. Preferably, the epoxide-functional groups on the oligomer react with the carboxyl-functional groups on the polymer to form covalent links between the polymer and the oligomer. Preferably, the trialkoxysilyl-functional groups react with each other via hydrolysis and condensation to form crosslinks. It is contemplated that the crosslinking reaction of trialkoxysilyl-functional groups reacting with each other can be accomplished at relatively low temperture. It is also contemplated that the crosslinking reaction of trialkoxysilyl-functional groups reacting with each other releases little or no formaldehyde.

It is also contemplated that some of the trialkoxysilyl-functional groups will react with the hydroxyl group of the cellulosic or synthetic fibers to form permanent covalent bonds, hence reinforcing the fiber mat.

After the water has been evaporated from the aqueous composition of the present invention and the latent crosslinking has taken place, it is expected that the collection of fibers will have desirable physical properties such as relatively high tensile strength. It is desirable that the tensile strength be relatively high when the sample is tested in a dry condition, when the sample is wet with water, and when the sample is in contact with isopropyl alcohol (IPA).

Preferred fibers for nonwoven textiles are cellulosic fibers, synthetic fibers, and mixtures thereof. Nonwoven textiles may be used for any purpose, including, for example, for filtration and as wipes.

The following are examples of the present invention.

The following abbreviations are used in the following examples:
- THF: = tetrahydrofuran
- BA: = butyl methacrylate
- STY: = styrene
- GMA: = glycidyl methacrylate
- AA: = acrylic acid
- IA: = itaconic acid
- MATS: = 3-(trimethoxysilyl)propyl methacrylate
- VTMS: = vinyl trimethoxysilane
- nDDM: = n-dodecyl mercaptan
- MTMO: = 3-mercaptopropyl trimethoxysilane
- Polymer1: = (parts by weight) 76 BA / 19 STY / 3.5 AA / 1.5 IA, latex polymer made by emulsion polymerization

Samples were prepared as follows. Whatman™ filter paper (4 CHR grade) was used as a fiber mat. The fiber mat was treated with the aqueous composition (diluted with water to 7.5% polymer and oligomer solids by weight) by dipping and padding using Brich Brothers padder (Brich Brothers Southern, Inc.). Samples were dried in a forced-air oven at 100 to 150°C (the "cure temperature") for 3 minutes. The weight ratio of dry filter paper to dry polymer was approximately 100:15.

The tensile testing of the samples was conducted at approximately 23°C as follows: Thwing Albert Tensile Tester EJA series instrument was used for tensile testing. Polymer coated fiber mat was cut in dimension of 10.16 cm (4 inch) X 2.54 cm (1 inch) rectangle strips for tensile testing.
Gage Length = 5.08 cm (2 inches)
Test Speed = 30.08 cm / min (12 inches / min)
Sample Width = 2.54 cm (1 inch)
Sample Thickness = 0.025 mm (0.001 inch)
The maximum tensile force was recorded as the tensile strength, in units of grams of force per 2.54 cm of width (herein abbreviated "g/in"). Tensile testing is performed at ambient conditions (approximately 23°C).

All tensile testing was performed on sample strips of dipped, padded, and dried filter paper that had been prepared by the method described above. "Dry" tensile tests were performed on such sample strips without further preparation. For "Wet" and "IPA" tensile tests, 10 strips were soaked in either 60 grams of deionized (DI) water or 60 grams of isopropyl alcohol (IPA) for 30 minutes. Testing strips were patted dry using paper towel and tested for tensile strength as described above. "Wet" results are for samples soaked in DI water, and "IPA" results are for samples soaked in IPA.

"Wet retention" is the quotient of wet tensile strength divided by the dry tensile strength, expressed as a percentage. "IPA retention" is the quotient of IPA tensile strength divided by the dry tensile strength, expressed as a percentage.

### Example 1: Oligomers

The following oligomer compositions were made by emulsion polymerization:

**Oligomer Compositions: amounts in parts by weight (parts sometimes add up to more than 100 parts)**

| Oligomer | BA | STY | GMA | MATS | VTMS | nDDM | MTMO |
|---|---|---|---|---|---|---|---|
| O1 | 71 | 19 | 5 | 5 | | 18.8 | |
| O2 | 66 | 19 | 5 | 10 | | 18.8 | |
| O3 | 61 | 19 | 5 | 15 | | 18.8 | |
| O4 | 56 | 19 | 5 | 20 | | 18.8 | |
| O5 | 71 | 19 | 5 | | 5 | 18.8 | |
| O6 | 66 | 19 | 5 | | 10 | 18.8 | |
| O7 | 61 | 19 | 5 | | 15 | 18.8 | |
| O8 | 56 | 19 | 5 | | 20 | 18.8 | |
| O9 | 71 | 19 | 5 | | | | 5 |
| O10 | 66 | 19 | 5 | | | | 10 |
| O11 | 61 | 19 | 5 | | | | 15 |
| O12 | 56 | 19 | 5 | | | | 20 |

The THF-soluble portion of the above oligomer compositions were characterized by size exclusion chromatography calibrated with polystyrene. Samples O1 through O8 dissolved fully in THF at 25°C to the extent of 0.25 g of oligomer composition per 50 g of THF. Each sample produced either one or two peaks (that is, "modes") in the graph of abundance versus molecular weight. The Mw of each mode is reported. Results were as follows:

**Oligomer Compositions THF-Soluble Portions**

| Oligomer | M.W. of 30%⁽¹⁾ | M.W. of 50%⁽²⁾ | Mw of 1st mode | Mw of 2nd mode |
|---|---|---|---|---|
| O1 | 1,070 | 1,770 | 1,900 | 22,600 |
| O2 | 890 | 1,500 | 1,700 | 41,000 |
| O3 | 903 | 1,440 | 1,700 | 26,000 |
| O4 | 729 | 1,130 | 1,500 | 41,000 |
| O5 | 835 | 1,290 | 3,700 | none |
| O6 | 741 | 1,140 | 2,600 | none |
| O7 | 704 | 1,060 | 2,200 | none |
| O8 | 647 | 962 | 2,200 | none |
| O9 | 3,270 | 4,170 | 2,500 | 173,000 |
| O10 | 2,500 | 8,310 | 2,900 | 117,000 |
| O11 | 2,210 | 3,420 | 3,000 | 89,000 |
| O12 | 2,210 | 2,940 | 3,200 | 60,000 |

| | | | | |
|---|---|---|---|---|
| (1) Molecular Weight below which are 30% of the molecules, by weight based on the weight of the THF-soluble portion of the oligomer composition. (2) Molecular Weight below which are 50% of the molecules, by weight based on the weight of the THF-soluble portion of the oligomer composition. | | | | |

### Example 2: Testing of samples treated with oligomers

Filter paper samples were made, treated with oligomer, and tested as described above, with cure temperature of 150°C. Results were as follows:

**Tensile properties of samples treated with oligomer only**

| | Tensile Strength (g/in) | | | Retention | |
|---|---|---|---|---|---|
| Oligomer | Dry | Wet | IPA | Wet | IPA |
| O1 | 1206 | 177 | 596 | 15% | 49% |
| O2 | 1340 | 342 | 636 | 26% | 47% |
| O3 | 1387 | 279 | 724 | 20% | 52% |
| O4 | 1492 | 318 | 795 | 21% | 53% |
| O5 | 1724 | 260 | 842 | 15% | 49% |
| O6 | 1353 | 202 | 545 | 15% | 40% |
| O7 | 1487 | 197 | 732 | 13% | 49% |
| O8 | 1528 | 212 | 735 | 14% | 48% |
| O9 | 5462 | 1309 | 2332 | 24% | 43% |
| O10 | 4837 | 951 | 2245 | 20% | 46% |
| O11 | 4516 | 820 | 2142 | 18% | 47% |
| O12 | 4005 | 781 | 2023 | 19% | 51% |

The samples treated with oligomer alone achieved acceptable tensile strength and had acceptable retention results. It is contemplated that the amount of polymerized units of trialkoxysilyl-functional groups in the oligomer could be adjusted to improve the performance even further. It is also contemplated that, because trialkoxysilyl-functional groups react at relatively low temperatures, that samples treated with oligomer alone and dried at temperatures of 100°C and above but below 150°C would also achieve acceptable results for tensile strength and retention. It is expected that retention results for treatment with oligomer alone would not vary significantly as a function of drying temperature, and it is considered that such retention results would indicate that the oligomer compositions had achieved the maximum crosslinking of which they are capable under thermal cure conditions, even at temperatures as low as 100°C. It is also contemplated that it would be possible to use a reduced amount of oligomer alone and still achieve acceptable tensile strength and retention.

### Comparative Example 3: Testing of polymer alone

Filter paper samples were made, treated with polymer, and tested as described above, with cure temperature of 150°C. Results were as follows:

**Tensile properties of samples treated with polymer only**

| | Tensile Strength (g/in) | | | Retention | |
|---|---|---|---|---|---|
| Polymer | Dry | Wet | IPA | Wet | IPA |
| Polymer1 | 5960 | 2119 | 1637 | 36% | 27% |

### Example 4: Testing of blends of polymer and oligomer

Latex Polymer1 was blended with each of the example oligomer latices to give a ratio of polymer weight to oligomer weight of 80/20. Filter paper samples were made, treated with a blend, and tested as described above, with cure temperature of 150°C. Results were as follows:

**Tensile properties of samples treated with polymer/oligomer blends (80/20)**

| | Tensile Strength (g/in) | | | Retention | |
|---|---|---|---|---|---|
| Oligomer | Dry | Wet | IPA | Wet | IPA |
| O1 | 5078 | 1950 | 1726 | 38% | 34% |
| O2 | 4834 | 1905 | 1690 | 39% | 35% |
| O3 | 4987 | 1946 | 1682 | 39% | 34% |
| O4 | 5400 | 2107 | 1713 | 39% | 32% |
| O5 | 5286 | 1804 | 1523 | 34% | 29% |
| O6 | 5290 | 1994 | 1703 | 38% | 32% |
| O7 | 5143 | 1621 | 1571 | 32% | 31% |
| O8 | 5453 | 1932 | 1747 | 35% | 32% |
| O9 | 5828 | 2201 | 1897 | 38% | 33% |
| O10 | 6084 | 2221 | 1737 | 37% | 29% |
| O11 | 5824 | 2303 | 1671 | 40% | 29% |
| O12 | 5932 | 2114 | 1744 | 36% | 29% |

The blends showed generally better IPA tensile strength than did Polymer1 alone. All of the blends in which the oligomer contained polymerized units of MATS or MTMO had better IPA tensile strength than Polymer1 alone did.

The samples treated with blends of polymer and oligomer achieved acceptable tensile strength and had acceptable retention results. It is contemplated that the amount of polymerized units of trialkoxysilyl-functional groups in the oligomer could be adjusted to improve the performance even further. It is also contemplated that, because trialkoxysilyl-functional groups react at relatively low temperatures, that samples treated with blends and dried at temperatures of 100°C and above but below 150°C would also achieve acceptable results for tensile strength and retention. It is expected that retention results for treatment with blends would not vary significantly as a function of drying temperature, and it is considered that such retention results would indicate that the oligomer compositions had achieved the maximum crosslinking of which they are capable under thermal cure conditions, even at temperatures as low as 100°C. It is also contemplated that it would be possible to use a reduced amount of blend and still achieve acceptable tensile strength and retention.

## Claims

1. An aqueous composition comprising water and an oligomeric composition, wherein said oligomeric composition comprises polymerized units of
(a) one or more monoethylenically unsaturated epoxide-functional monomers,
(b) one or more monoethylenically unsaturated alkoxysilane-functional monomers,
(c) one or more chain transfer agents, and
(d) one or more monoethylenically unsaturated monomers different from (a), (b), and (c)
wherein an oligomeric composition is a composition where the portion of the composition that is soluble in tetrahydrofuran (THF) to the extent of 0.25 g or more per 50 g of THF at 25°C is as follows: the THF-soluble portion contains polymerized units of one or more monomers and is a composition in which 30% or more by weight, based on the weight of the THF-soluble portion of the composition, is molecules having a molecular weight of 5,000 or less.

2. The aqueous composition of claim 1, wherein said aqueous composition additionally comprises dispersed polymer particles that comprise polymer that comprises polymerized units comprising
(A) one or more monoethylenically unsaturated monomers, wherein one or more of said monomers (A) is the same as one or more of said monomers (d).

3. The aqueous composition of claim 2, wherein said polymer additionally comprises polymerized units of one or more carboxyl-functional monomer.

4. A method of treating a textile comprising
(i) bringing the aqueous composition of claim 1 into contact with said textile and
(ii) then evaporating said water from said aqueous composition.

5. The method of claim 4, wherein said step (ii) comprises bringing said aqueous composition into contact with air that has a temperature of 80°C or higher.

## Patentansprüche

1. Eine wässrige Zusammensetzung, die Wasser und eine oligomere Zusammensetzung beinhaltet, wobei die oligomere Zusammensetzung polymerisierte Einheiten von Folgendem beinhaltet:
(a) einem oder mehreren monoethylenisch ungesättigten funktionellen Epoxid-Monomeren,
(b) einem oder mehreren monoethylenisch ungesättigten funktionellen Alkoxysilan-Monomeren,
(c) einem oder mehreren Kettenüberträgern und
(d) einem oder mehreren ethylenisch ungesättigten Monomeren, die sich von (a), (b) und (c) unterscheiden
wobei eine oligomere Zusammensetzung eine Zusammensetzung ist, bei der der Teil der Zusammensetzung, der in Tetrahydrofuran (THF) bis zum Betrag von 0,25 g oder mehr pro 50 g THF bei 25 °C löslich ist, wie folgt ist: der in THF lösliche Teil enthält polymerisierte Einheiten von einem oder mehreren Monomeren und ist eine Zusammensetzung, bei der, bezogen auf das Gewicht des in THF löslichen Teils der Zusammensetzung, 30 Gew.-% oder mehr Moleküle mit einem Molekulargewicht von 5 000 oder weniger sind.

2. Wässrige Zusammensetzung gemäß Anspruch 1, wobei die wässrige Zusammensetzung zusätzlich dispergierte Polymerpartikel beinhaltet, die Polymer beinhalten, das polymerisierte Einheiten beinhaltet, beinhaltend:
(A) ein oder mehrere monoethylenisch ungesättigte Monomer, wobei ein oder mehrere der Monomere (A) dieselben wie eines oder mehrere der Monomere (d) sind.

3. Wässrige Zusammensetzung gemäß Anspruch 2, wobei das Polymer zusätzlich polymerisierte Einheiten von einem oder mehreren funktionellen Carboxyl-Monomeren beinhaltet.

4. Ein Verfahren zum Behandeln eines Textils, das Folgendes beinhaltet:
(i) In-Kontakt-Bringen der wässrigen Zusammensetzung gemäß Anspruch 1 mit dem Textil und
(ii) dann Verdampfen des Wassers aus der wässrigen Zusammensetzung.

5. Verfahren gemäß Anspruch 4, wobei der Schritt (ii) das In-Kontakt-Bringen der wässrigen Zusammensetzung mit Luft, die eine Temperatur von 80 °C oder mehr aufweist, beinhaltet.

## Revendications

1. Une composition aqueuse comprenant de l'eau et une composition oligomère, dans laquelle ladite composition oligomère comprend des unités polymérisées de
(a) un ou plusieurs monomères à fonction époxyde monoéthylèniquement insaturés,
(b) un ou plusieurs monomères à fonction alcoxysilane monoéthylèniquement insaturés,
(c) un ou plusieurs agents de transfert de chaîne, et
(d) un ou plusieurs monomères monoéthylèniquement insaturés différents de (a), (b), et (c)
dans laquelle une composition oligomère est une composition où la portion de la composition qui est soluble dans du tétrahydrofurane (THF) à raison de 0,25 g ou plus par 50 g de THF à 25° C est comme suit : la portion soluble dans du THF contient des unités polymérisées d'un ou de plusieurs monomères et est une composition dans laquelle 30 % ou plus en poids, rapporté au poids de la portion soluble dans du THF de la composition, consiste en des molécules ayant un poids moléculaire de 5 000 ou moins.

2. La composition aqueuse de la revendication 1, ladite composition aqueuse comprenant en plus des particules de polymère dispersées qui comprennent un polymère qui comprend des unités polymérisées comprenant
(A) un ou plusieurs monomères monoéthylèniquement insaturés, dans laquelle un ou plusieurs desdits monomères (A) sont identiques à un ou plusieurs desdits monomères (d).

3. La composition aqueuse de la revendication 2, dans laquelle ledit polymère comprend en plus des unités polymérisées d'un ou de plusieurs monomères à fonction carboxyle.

4. Un procédé de traitement d'un textile comprenant
(i) la mise en contact de la composition aqueuse de la revendication 1 avec ledit textile et
(ii) puis l'évaporation de ladite eau de ladite composition aqueuse.

5. Le procédé de la revendication 4, dans lequel ladite étape (ii) comprend la mise en contact de ladite composition aqueuse avec de l'air qui a une température de 80° C ou au-delà.
